**Europäisches Patentamt**

**European Patent Office**

**Office européen des brevets**

(19)

(11) Veröffentlichungsnummer: **0 197 288**
**B1**

# EUROPÄISCHE PATENTSCHRIFT

(12)

(45) Veröffentlichungstag der Patentschrift:
**03.05.89**

(21) Anmeldenummer: **86102714.2**

(22) Anmeldetag: **01.03.86**

(51) Int. Cl.⁴: **A 01 C 17/00**

(54) **Rotierender mechanischer Werfer.**

(30) Priorität: **13.03.85 EP 85102882**

(43) Veröffentlichungstag der Anmeldung:
**15.10.86 Patentblatt 86/42**

(45) Bekanntmachung des Hinweises auf die Patenterteilung:
**03.05.89 Patentblatt 89/18**

(84) Benannte Vertragsstaaten:
**DE FR GB NL**

(56) Entgegenhaltungen:
**FR-A- 1 469 578**
**GB-A- 2 058 533**
**GB-A- 2 105 162**

(73) Patentinhaber: **Kirchberger, Franz, Lichtenfelser Strasse 43, D-8623 Staffelstein (DE)**

(72) Erfinder: **Griessl, Franz, Dr. Hans-Erhard-Strasse 15, D-8600 Bamberg (DE)**
Erfinder: **Kirchberger, Franz, Lichtenfelser Strasse 43, D-8623 Staffelstein (DE)**

(74) Vertreter: **LOUIS, PÖHLAU, LOHRENTZ & SEGETH, Kesslerplatz 1 Postfach 3055, D-8500 Nürnberg (DE)**

## Beschreibung

Die Erfindung betrifft einen rotierenden oder versatilierenden mechanischen Werfer für Stoffe wie z.B. Kultiviergut, Sand oder Salz, bei dem die Arbeitshöhe und/oder die Winkelstellung des Werferwerkzeuges änderbar sind.

Kunstdünger, Sand, Salz und viele andere Stoffe werden mit Hilfe rotierender oder versatilierender mechanischer Werfer verstreut, die über dem Boden verfahren werden. Die Umdrehungsgeschwindigkeit des Werferwerkzeuges, die Höhe des Werferwerkzeuges über dem Boden und seine Winkelstellung gegenüber dem Boden bestimmen dabei die Wurfweite und damit die Verteilbreite und Flächenkonzentration des jeweils verteilten Stoffes auf dem Boden (siehe beispielsweise GB-A 2 058 533). Nach dem Stand der Technik wird im Betrieb die Arbeitshöhe und die Winkelstellung des Werferwerkzeuges über dem Boden konstant gehalten, während die Drehgeschwindigkeit des Werferwerkzeuges und damit die Wurfweite Änderungen unterliegt. So z.B. ändert sich die Wurfweite eines Düngemittelstreuers, der an der Zapfwelle eines Traktors angeschlossen ist, mit der Motordrehzahl.

Bislang wurden noch keine erfolgversprechenden Versuche unternommen, den oben angesprochenen Wurfweitenschwankungen wirksam zu begegnen. Mit der Erfindung hingegen soll nun ein Werfer der eingangs genannten Art derart ausgebildet werden, daß im Betrieb auftretende Wurfweitenschwankungen weitgehendst unterdrückt werden.

Diese Aufgabe wird erfindungsgemäß dadurch gelöst, daß die Arbeitshöhe des Werferwerkzeuges über dem Boden eine Steuervorrichtung zur Veränderung der Arbeitshöhe und/oder der Winkelstellung des Werferwerkzeuges während seines Betriebs in Abhängigkeit von der Werferwerkzeuggeschwindigkeit zum Konstanthalten der Wurfweite vorgesehen ist.

Dadurch, daß die Arbeitshöhe des Werferwerkzeuges vergrößert oder der Winkel des Werferwerkzeuges gegenüber dem Boden steiler gestellt wird, wenn die Drehgeschwindigkeit des Werferwerkzeuges sinkt bzw. die Arbeitshöhe verringert oder der Winkel flacher gestellt wird, wenn die Drehgeschwindigkeit des Werferwerkzeuges steigt, lassen sich Schwankungen in der Werferwerkzeuggeschwindigkeit, soweit sie sich auf die Wurfweite auswirken, kompensieren.

Vorzugsweise ist ein auf den zur Seite hin gerichteten Wurf des zu verteilenden Gutes ansprechender und nahe der oder auf der Bodenoberfläche geführter Prallaufnehmer vorgesehen. Ein derartiger Prallaufnehmer kann zur Umwandlung der mechanischen Impulse in elektrische Signale mit DMS-Streifen oder Piezokristallen bestückt sein. Dabei kann eine sich über eine kurze Zeitspanne hinweg ergebende mittlere Aufprallintensität (zeitliches Integral des elektrischen Signals, in das Anzahl und Größe der Impulse eingehen) gemessen werden, wobei dann durch Vorgabe einer mittleren Aufprallintensität die Abhängigkeit der Höhe oder des Winkels des Werferwerkzeuges von der Drehzahl des Werferwerkzeuges bestimmt werden kann. Nach dieser Funktion wird dann die Höhe und/oder der Winkel des Werferwerkzeuges im Betrieb der Maschine mit Hilfe der Steuervorrichtung geändert, wobei eine Korrektur im Betrieb der Maschine nach gewissen Zeitabständen vorgenommen werden kann, indem entweder die Funktion komplett neu bestimmt wird oder einfach durch Messung eines neuen Wertepaares Drehzahl/Werferwerkzeughöhe die alte ermittelte Funktion parallel zu sich selbst verschoben wird. Durch Messung der mittleren Aufprallintensität kann nicht nur die Wurfbreite sondern auch die Flächenkonzentration berücksichtigt werden.

Bei vorgegebener mittlerer Aufprallintensität läßt sich durch den seitlichen Abstand des Prallaufnehmers zum Werferwerkzeug bei vorgegebener Flächenkonzentration die Verteilbreite des Gutes vorgeben. Der seitliche Abstand des Prallaufnehmers zum Werkzeug ist daher zweckmäßiger einstellbar.

Der Prallaufnehmer läßt sich ohne Schwierigkeiten über der Bodenoberfläche führen, wenn er über ein flexibles Verbindungselement mit dem Werfer verbunden ist. Der Prallaufnehmer kann schleifend über dem Boden geführt werden. Bei Bodenerhebungen biegt sich das flexible Verbindungselement, beispielsweise ein Stahlband, einfach durch.

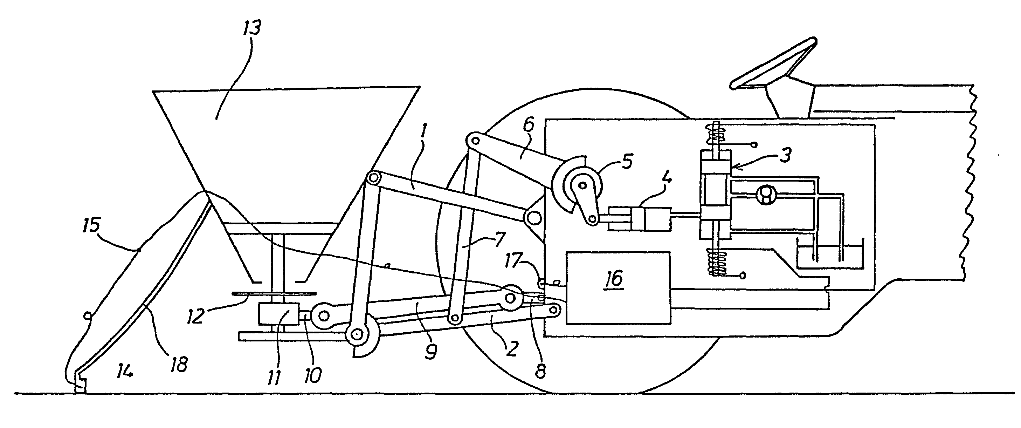

In der beiliegenden Zeichnung ist die Erfindung am Beispiel eines an einem Traktor angeschlossenen Düngemittelstreuers schematisch veranschaulicht.

Der in der Zeichnung dargestellte Traktor weist eine Hydraulikanlage für ein Dreipunktgestänge auf, an dem in diesem Falle ein Düngemittelstreuer befestigt ist. Das Dreipunktgestänge weist einen oberen Lenker 1 und zwei untere Lenker 2 auf. Ein durch ein Magnetventil 3 gesteuerter hydraulischer Arbeitszylinder 4 bewirkt über eine Hubwelle 5, Hubarme 6 und Hubstangen 7, die mit den unteren Lenkern 2 verbunden sind, das Heben und Senken des Düngemittelstreuers. Die Zapfwelle 8 des Traktors ist über eine Gelenkwelle 9 mit dem Antriebswellenstummel 10 eines Winkelgetriebes 11 des Düngemittelstreuers verbunden, das zum Antrieb einer Wurfscheibe 12 des Düngemittelstreuers verwendet wird. Am Vorratsbehälter 13 des Düngemittelstreuers ist über ein flexibles Verbindungselement 18, beispielsweise ein Stahlband, in einem Abstand von der Wurfscheibe 12 ein auf dem Boden schleifender piezoelektrischer Prallaufnehmer 14 befestigt. Der piezoelektrische Prallaufnehmer 14 ist über eine Leitung 15 mit einer Steuerelektronik 16 verbunden, in die auch das Ausgangssignal eines Näherungsschalters 17 zur Aufnahme der Antriebsdrehzahl der Zapfwelle 8 eingespeist wird.

Die Steuerelektronik 16 kann dabei wie oben angegeben arbeiten.

## Patentansprüche

1. Rotierender oder versatilierender mechanischer Werfer für Gut wie z.B. Kultiviergut, Sand oder Salz, bei dem die Arbeitshöhe und/oder die Winkelstellung des Werferwerkzeuges änderbar sind, dadurch gekennzeichnet, daß eine Steuervorrichtung zur Veränderung der Arbeitshöhe und/oder der Winkelstellung des Werferwerkzeuges während seines Betriebs in Abhängigkeit von der Werferwerkzeuggeschwindigkeit zum Konstanthalten der Wurfweite vorgesehen ist.

2. Werfer nach Anspruch 1, dadurch gekennzeichnet, daß ein auf den zur Seite hin gerichteten Wurf des Gutes ansprechender und nahe der oder auf der Bodenoberfläche geführter Prallaufnehmer (14) vorgesehen ist.

3. Werfer nach Anspruch 2, dadurch gekennzeichnet, daß der seitliche Abstand des Prallaufnehmers (14) zum Werferwerkzeug (12) einstellbar ist.

4. Werfer nach Anspruch 2 oder 3, dadurch gekennzeichnet, daß der Prallaufnehmer über ein flexi-bles Verbindungselement (18) mit dem Werfer ver-bunden ist.

## Claims

1. A rotating mechanical spreader for material such as, for example, agricultural material, sand or salt, wherein the working height and/or the angular setting of the casting means can be altered, characterised in that provision is made for a control device for altering the working height and/or the angular setting of the casting means during its operation in accordance with the speed of the casting means in order to keep the casting width constant.

2. A spreader according to Claim 1, characterised in that provision is made for an impact detector (14) responding to the lateral casting of the material and carried near or on the surface of the ground.

3. A spreader according to Claim 2, characterised in that the lateral distance of the impact detector (14) from the casting means (12) is adjustable.

4. A spreader according to Claim 2 or 3, characterised in that the impact detector is connected to the spreader via a flexible connecting element (18).

## Revendications

1. Epandeur mécanique rotatif ou universel pour des matières telles que par exemple un produit de culture, du sable ou du sel, dans lequel la hauteur de travail et/ou la position angulaire de l'outil d'épandage peuvent être modifiées, caractérisé en ce que, en vue de maintenir constante l'étendue de l'épandage, il est prévu un dispositif de commande destiné à varier la hauteur de travail et/ou la position angulaire de l'outil d'épandage, pendant son fonctionnement, en fonction de la vitesse de cet outil.

2. Epandeur suivant la revendication 1, caractérisé en ce qu'il est prévu un absorbeur de chocs (14) qui agit sur l'épandage, dirigé vers le côté, du produit et qui est guidé au voisinage de la surface du sol ou sur celle-ci.

3. Epandeur suivant la revendication 2, caractérisé en ce que l'écart latérala de l'absorbeur de chocs (14) par rapport à l'outil d'épandage (12) est réglable.

4. Epandeur suivant la revendication 2 ou 3, caractérisé en ce que l'absorbeur de chocs est relié par un élément de liaison flexible (18) à l'épandeur.

EP 0 197 288 B1